# EUROPEAN PATENT SPECIFICATION

(11) **EP 2 330 655 B1**
(45) Date of publication and mention of the grant of the patent: **14.11.2018**
(21) Application number: 10186746.3
(22) Date of filing: 06.10.2010
(51) Int. Cl.: H01M 2/02, H01M 6/50, H01M 10/48

(54) **Secondary battery**
Sekundärbatterie
Batterie secondaire

(30) Priority: 02.12.2009 US 265840 P
(43) Date of publication of application: 08.06.2011
(73) Proprietor: Samsung SDI Co., Ltd., Gyeonggi-do 17084 (KR)
(72) Inventor: Sim, Se-Sub, Gyeonggi-do (KR); Segawa, Susumu, Gyeonggi-do (KR); Hwang, Eui-Jeong, Gyeonggi-do (KR); Yang, Jong-Woon, Gyeonggi-do (KR); Yun, Han-Seok, Gyeonggi-do (KR); Kim, Beom-Gyu, Gyeonggi-do (KR); Kim, Jin-Wan, Gyeonggi-do (KR)
(74) Representative: Grey, Ian Michael

(56) References cited:
- EP-A1- 2 061 105
- JP-A- 2005 135 771
- JP-A- 2006 011 050
- US-A1- 2003 226 897

## Description

The embodiment of the present invention relates to a secondary battery that comprises a housing to receive an electrode assembly. More particularly, the invention relates to a secondary battery that provides a visual confirmation of whether the battery has been exposed to a fluid and/or whether a user has attempted to disassemble or modify the battery.

As the use of portable electronic apparatus increases, the use of rechargeable secondary batteries also increases and research for implementing miniaturization and light weight of a secondary battery is in progress.

As a representative secondary battery, operation voltage and energy density per unit weight in a lithium (Li) battery are higher than a nickel-cadmium (Ni-Cd) battery or a nickel-hydrogen (NI-MH) battery, so the use of lithium (Li) batteries is becoming more common.

The lithium battery is classified into a lithium-ion battery using liquid electrolyte and a lithium-polymer battery using polyelectrolyte. The lithium battery can be manufactured in various types such as a cylinder type, a prismatic type, a can type, and a pouched type in accordance with a case type.

The secondary battery of one of the aforementioned types generally includes an electrode assembly for generating a current and a pouch housing the electrode assembly. The secondary battery may further include a protection circuit that controls charge and discharge and an exterior material for sealing and protecting the battery.

In recent years, there has been a demand for secondary batteries with reduced size and thickness and a method of substituting the exterior material with a label sheet has been adopted. However, in this case, since the label sheet can be easily removed, a risk caused by disassembling and modification of the battery may be generated and it is difficult for a service center to recognize whether a user has disassembled and/or modified the battery. Further, when moisture permeates into the second battery, the performance of the secondary battery is deteriorated and the lifespan of the secondary battery is remarkably shortened. In the case where it is easy for the user to disassemble and modify the secondary battery, it is difficult for a service centre to verify whether or not moisture has been allowed to permeate into the second battery.

The present invention also seeks to provide a secondary battery in which it is possible to easily verify whether or not the second battery has been exposed to moisture.

Additionally or alternatively, the present invention may seek to provide a secondary battery in which any attempts to modify or disassemble it are apparent from a visual inspection.

It is known from JP 2005135771 to provide a secondary battery comprising a housing to receive an electrode assembly, a liquid impermeable sheet, a liquid permeable sheet bonded to the liquid impermeable sheet and an indicator located between said liquid permeable sheet and liquid impermeable sheet to provide visual confirmation indicative of whether the battery has been exposed to a liquid.

A secondary battery according to the invention, is characterised in that the liquid impermeable sheet and the liquid permeable sheet together form a label for application to the exterior surface of the housing so that the liquid impermeable sheet protects the battery from moisture, and in that the liquid impermeable sheet is an inner sheet bonded to the housing and the liquid permeable sheet is an outer sheet bonded to the liquid impermeable sheet.

In one embodiment, the outer liquid permeable sheet extends over the indicator.

In another embodiment, the outer liquid permeable sheet may extend only partially over the indicator. In this case, the outer liquid permeable sheet may have at least one opening in a region of the indicator.

The indicator may comprise a unitary layer configured to provide said visual confirmation when exposed to a liquid.

In a preferred embodiment, the indicator comprises a first layer configured to provide said visual confirmation when exposed to a liquid, and a substrate layer that attaches the first layer to the inner liquid impermeable sheet.

The substrate may have an outer surface facing away from the inner liquid impermeable sheet and the first layer can be applied to a central region of said outer surface such that the substrate layer extends beyond the first layer around a periphery of the first layer.
The opening may be sized such that the outer liquid permeable sheet extends over a peripheral edge of the indicator or over a peripheral edge of the first layer of the indicator.

Furthermore, the opening may be sized so that the outer liquid permeable sheet extends over a peripheral edge of the substrate layer of the indicator.
In a preferred embodiment, the first layer is configured to change its shape, form or colour when exposed to a liquid.

The inner liquid impermeable sheet and outer liquid permeable sheet together form a label for application to the exterior surface of the housing.
In one embodiment, the indicator is also configured to provide visual confirmation indicative of whether an attempt has been made to remove the outer liquid permeable sheet from the inner fluid impermeable sheet.
Preferably, the outer liquid permeable sheet is bonded to said indicator such that said outer liquid permeable sheet cannot be separated from the indicator without causing damage to said indicator.
In one embodiment, the inner liquid impermeable sheet, the outer liquid permeable sheet and the indicator may be bonded such that the bond between the outer liquid permeable sheet and the indicator is stronger than the bond between the indicator and the inner liquid impermeable sheet, such that the indicator will at least partially lift off from the inner liquid impermeable sheet, and/or incur damage, when an attempt is made to separate the outer liquid permeable sheet from the inner liquid impermeable sheet.

Embodiments of the invention will now be described, by way of example only, and with reference to the accompanying drawings, in which:
FIGURE 1 is a perspective view for describing an embodiment of a secondary battery according to the present invention;
FIGURE 2 is an exploded perspective view of a secondary battery according to the present invention;
FIGURE 3 is a perspective view for describing a label sheet shown in Figure 1;
FIGURE 4A is a plan view for describing an embodiment of a submergence label shown in Figure. 1;
FIGURE 4B is a cross-sectional view taken along line 11-12 of Figure 4A;
FIGURE 5A is a plan view for describing an embodiment of the present invention;
FIGURE 5B is a cross-sectional view taken along line 111-112 of Figure 5A;
FIGURE 6A is a plan view for describing another embodiment of the present invention;
FIGURE 6B is a cross-sectional view taken along line 121-122 of Figure 6A;
FIGURE 6C is a plan view for describing yet another embodiment of the present invention;
FIGURE 7A is a plan view for describing yet another embodiment of the present invention; and
FIGURE 7B is a cross-sectional view taken along line 131-132 of Figure 7A.

Hereinafter, preferred embodiments of the present invention will be described in detail with reference to the accompanying drawings. Hereinafter, embodiments are provided to be understood to those skilled in the art and can be varied in various forms and the scope of the present invention is not limited to the embodiments to be described below.

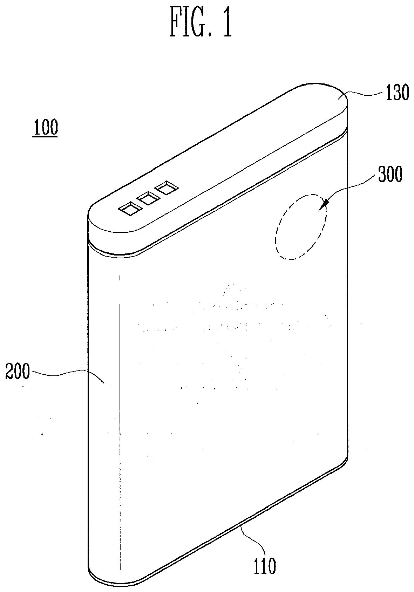

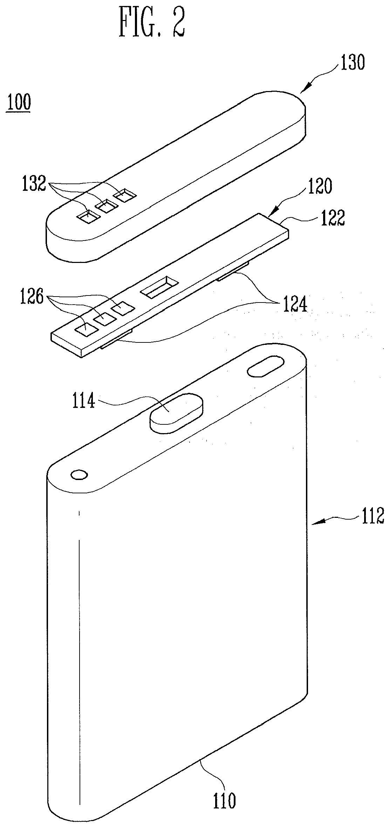

FIGS. 1 and 2 are perspective views for describing a secondary battery according to the present invention.

Referring to FIG. 1, in the secondary battery 100 according to the present invention, an exterior surface of a battery 110 is plated with a label sheet 200 comprising an inner liquid impermeable sheet 210 and an outer liquid permeable sheet 220. A submergence label or indicator 300 including a verification pattern 320 is interposed in the label sheet 200.

Referring to FIG. 2, the secondary battery 100 includes the battery 110 for generating a current, a circuit board 120 electrically connected with the battery 110, and a cover case 130 coupled with the battery 110 while covering the circuit board 120. The circuit board 120 is disposed at one side of the battery 110 and may be housed in the cover case 130.

The battery 110 includes an electrode assembly (not shown), a can 112 housing the electrode assembly, and an electrode terminal 114 that is electrically connected with the circuit board 120 while being connected with a positive plate or a negative plate of the electrode assembly.

In the figure, a prismatic battery 110 is shown, but the battery 110 may be a cylinder-type or pouched-type battery. In the present invention, the type of the battery 110 is not limited.

The circuit board 120 includes an insulating substrate 122 such as a printed circuit board (PCB) with a predetermined circuit wiring, etc., a circuit part 124 that is connected to the circuit wiring and protects the battery 110 while charging and discharging, and a terminal 126 for charging and discharging the battery 110.

A first electrode 114 and a second electrode 112 of the battery 110 are electrically connected to the circuit wiring through a wire or a lead tab. The circuit part 124 may include a passive element, an active element, and an integrated circuit IC.

The cover case 130 for insulating and protecting the circuit board 120 includes an opening 132 for exposing a terminal 126 of the circuit board 120 to the outside.

Parts of the circuit board 120 and the battery 110 may be housed in the cover case 130.

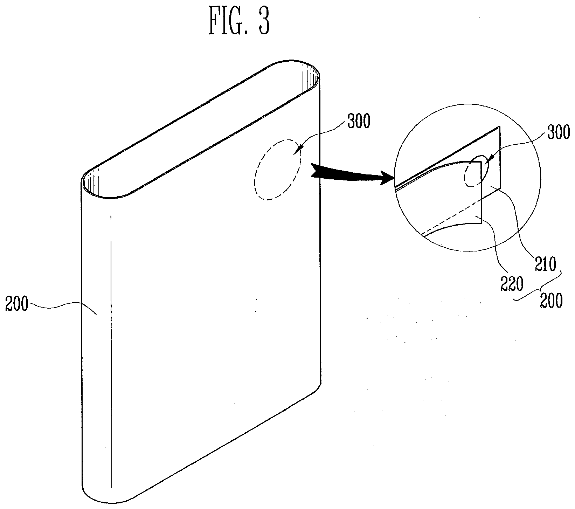

Referring to FIG. 3, an exterior of the battery 110 is plated with the label sheet 200. The label sheet 200 has a film shape to be bonded onto the exterior surface of the battery 110 or has a tube shape to be inserted with the battery 110.

As mentioned above, the label sheet 200 includes a first sheet or inner liquid impermeable sheet 210 bonded onto the exterior surface of the battery 110 and a second sheet or outer liquid permeable sheet 220 bonded onto the first sheet 210. An adhesive may be applied on one surface or both surfaces of the first sheet 210 and one surface of the second sheet 220 bonded with the first sheet 210 for bonding.

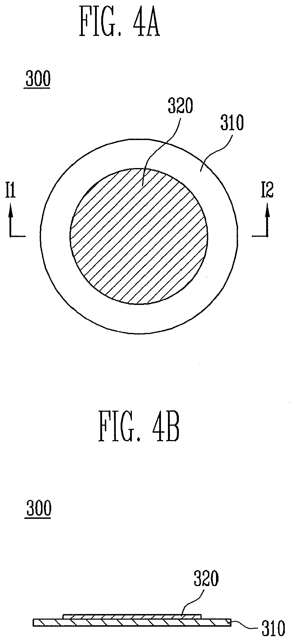

Referring to FIGS. 4A and 4B, the submergence label or indicator 300 is interposed at a predetermined part between the first sheet 210 and the second sheet 220. An attachment location of the submergence label 300 is determined as a part that is vulnerable to permeation of moisture in the structure of the battery 110 or by considering productivity in a manufacturing process, etc.

The submergence label 300 includes a substrate 310 of which one surface is attached to the first sheet 210 and a submergence verification pattern 320 formed by aqueous ink on the other surface of the substrate 310. The substrate 310 is made of paper, plastic, or vinyl.

In the figure, the submergence verification pattern 320 has a circular shape, but the submergence verification pattern 320 may have a rectangular, a dot, or mesh shape and may be formed in plural.

The submergence verification pattern 320 maintains a predetermined form and a predetermined shape when it does not contact moisture but is configured to assume a visually modified form or shape when exposed to moisture. The submergence verification pattern 320 may be formed, for example, by applying the aqueous ink and may spread or be discoloured when it contacts moisture or humidity according to the type of the aqueous ink.

In the embodiment, the submergence verification pattern 320 is formed by applying the aqueous ink to the substrate 310, but when the submergence verification pattern 320 is formed in a solid state, the submergence verification pattern 320 can be attached directly to the first sheet 210 without using any substrate. That is, only the submergence verification pattern 320 may be interposed between the first sheet 210 and the second sheet 220.

The first sheet 210 is made of a waterproof and insulating resin for insulating and protecting the battery 110 and the second sheet 220 is made of a moisture permeating resin. The aqueous pattern 320 spreads or changes as a result of moisture passing through the second sheet 220, such that it is possible to verify whether or not the secondary battery has been submerged or exposed to moisture. At this time, since the moisture passing through the second sheet 220 does not pass through the first sheet 210, the battery 110 is protected from the moisture.

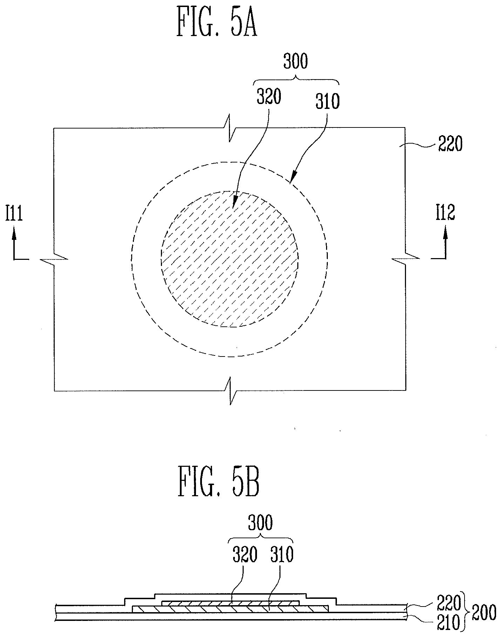

Referring to FIGS. 5A and 5B, a part of the submergence label 300 is attached to the second sheet 220. That is, an edge part of the substrate 310 or(and) a part of the submergence verification pattern 320 is bonded to the second sheet 220, such that when the second sheet 220 is damaged, the submergence verification pattern 320 is also inevitably damaged, thereby indicating whether or not the battery 110 has been disassembled or an attempt has been made to disassemble it.

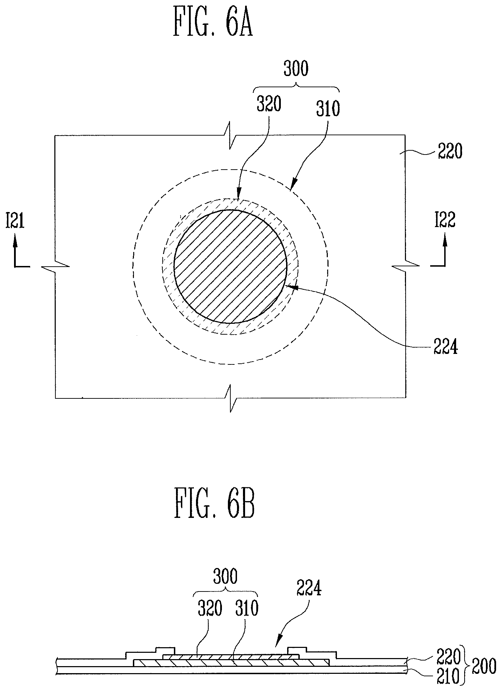

In FIGS. 5A and 5B, the submergence label 300 is airtightly sealed as a result of being interposed between the first sheet 210 and the second sheet 220, but as another embodiment of the present invention, as shown in FIGS. 6A and 6B, an opening 224 is formed on the second sheet 220 and a part of the submergence label 300, that is, a part of the submergence verification pattern 320 may be exposed through the opening 224. In this case, the edge part of the substrate 310 or(and) a part of the submergence verification pattern 320 is preferably bonded to the second sheet 220.

A part of the submergence verification pattern 320 is exposed through the opening 224 to be contacted directly with the submergence verification pattern 320. Therefore, it is possible to easily verify whether or not the secondary battery has been submerged or exposed to moisture.

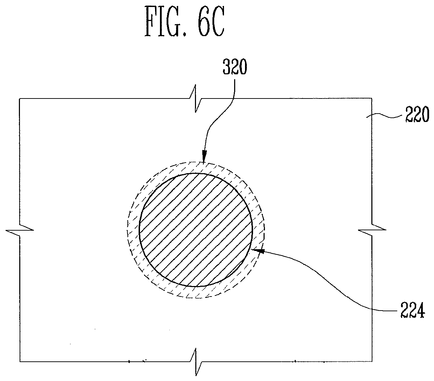

Further, as shown in FIG. 6C, the submergence verification pattern 320 having a solid shape as a structure without using a substrate is interposed between the first sheet 210 and the second sheet 220 and a part of the submergence verification pattern 320 can be exposed through the opening 224.

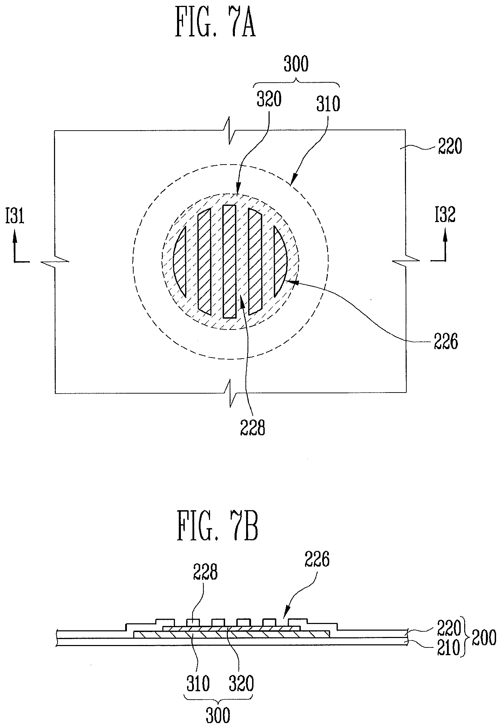

Further, as another embodiment, as shown in FIGS. 7A and 7B, an opening 226 is formed on the second sheet 220 and a part of the submergence label 300, that is, a part of the submergence verification pattern 320 can be exposed through the opening 226. A pattern 228 having a stripe or mesh form is formed in the opening 226, such that the submergence verification pattern 228 is bonded to the second sheet 220 to more effectively attach the submergence label 300 to the first and second sheets 210 and 220.

In the second battery of the present invention, the exterior surface of the battery is plated with the label sheet. The label sheet has a stacking structure of the first sheet and the second sheet and since the sheets are bonded to each other, disassembling is not easy and it is difficult to restore the sheets to the original state after an attempt has been made to dissassemble it.

Further, the secondary battery of the present invention includes the submergence verification pattern for verifying whether or not the secondary battery has been submerged or exposed to moisture. The submergence verification pattern is interposed between the first sheet and the second sheet and since the first sheet and the second sheet are bonded to each other, it is not easy to disassemble them and even though they can be disassembled, it is difficult to restore them to their original state.

Accordingly, it is possible to prevent a damage caused by user's disassembling or modifying of the secondary battery because they may decide not to attempt to disassemble the secondary battery if they are aware that they will be unable to reassemble it without it being apparent that it has been disassembled. It may also be possible to easily verify whether or not the secondary battery has been submerged or exposed to moisture due to user's carelessness or mistake.

An optimal embodiment of the present invention is disclosed through a detailed description and drawings as described above. Herein, specific terms have been used, but are just used for the purpose of describing the present invention and are not used for defining the meaning or limiting the scope of the present invention, which is disclosed in the appended claims. Therefore, it will be appreciated to those skilled in the art that various modifications are made and other equivalent embodiments are available, falling within the scope of the appended claims.

## Claims

1. A secondary battery comprising a housing (112) to receive an electrode assembly, a liquid impermeable sheet (210), a liquid permeable sheet (220) bonded to the liquid impermeable sheet (210) and an indicator (300) located between said liquid permeable sheet (220)and the liquid impermeable sheet (210) to provide visual confirmation indicative of whether the battery has been exposed to a liquid, **characterised in that** the liquid impermeable sheet (210) and the liquid permeable sheet (220) together form a label (200) for application to the exterior surface of the housing (112) so that the liquid impermeable sheet (210) protects the battery from moisture, and **in that** the liquid impermeable sheet (210) is an inner sheet bonded to the housing (112) and the liquid permeable sheet (220) is an outer sheet bonded to the liquid impermeable sheet (210).

2. A secondary battery according to claim 1, wherein the outer liquid permeable sheet (220) extends over the indicator (300).

3. A secondary battery according to claim 2, wherein the outer liquid permeable sheet (220) extends partially over the indicator (300).

4. A secondary battery according to claim 3, wherein the outer liquid permeable sheet (220) has at least one opening (224) in a region of the indicator (300).

5. A secondary battery according to any preceding claim, wherein the indicator (300) comprises a unitary layer configured to provide said visual confirmation when exposed to a liquid.

6. A secondary battery according to any of claims 1 to 4, wherein the indicator (300) comprises a first layer (320) configured to provide said visual confirmation when exposed to a liquid, and a substrate layer (310) that attaches the first layer (320) to the inner liquid impermeable sheet (210).

7. A secondary battery according to claim 6, wherein the substrate (310) has an outer surface facing away from the inner liquid impermeable sheet (210) and the first layer (320) is applied to a central region of said outer surface such that the substrate layer (310) extends beyond the first layer (320) around a periphery of the first layer (320).

8. A secondary battery according to claim 4, wherein the opening (224) is sized such that the outer liquid permeable sheet (220) extends over a peripheral edge of the indicator (300).

9. A secondary battery according to claim 6 to 7, wherein the opening (224) is sized so that the outer liquid permeable sheet extends (220) over a peripheral edge of the first layer (320) of the indicator (300).

10. A secondary battery according to claim 6 to 7, wherein the opening (224) is sized so that the outer liquid permeable sheet (220) extends over a peripheral edge of the substrate layer (310) of the indicator (300).

11. A secondary battery according to any of claims 3 to 10, wherein the first layer (320) is configured to change its shape, form or colour when exposed to a liquid.

12. A secondary battery according to any preceding claim, wherein the outer liquid permeable sheet (220) is bonded to said indicator (300) such that said outer liquid permeable sheet (220) cannot be separated from the indicator (300) without causing damage to said indicator (300) thereby providing visual confirmation indicative of whether an attempt has been made to remove the outer liquid permeable sheet (220) from the inner fluid impermeable sheet (210).

13. A secondary battery according to claim 12, wherein the inner liquid impermeable sheet (210), the outer liquid permeable sheet (220) and the indicator (300) are bonded such that the bond between the outer liquid permeable sheet (220) and the indicator (300) is stronger than the bond between the indicator (300) and the inner liquid impermeable sheet (210), such that the indicator (300) will at least partially lift off from the inner liquid impermeable sheet (210), and/or incur damage, when an attempt is made to separate the outer liquid permeable sheet (220) from the inner liquid impermeable sheet (210).

## Patentansprüche

1. Sekundärbatterie, umfassend ein Gehäuse (112) zum Aufnehmen einer Elektrodenanordnung, eine flüssigkeitsundurchlässige Folie (210), eine an die flüssigkeitsundurchlässige Folie (210) gebundene flüssigkeitsdurchlässige Folie (220) und einen zwischen der flüssigkeitsdurchlässigen Folie (220) und der flüssigkeitsundurchlässigen Folie (210) angeordneten Indikator (300) zum Bereitstellen einer visuellen Bestätigung darüber, ob die Batterie einer Flüssigkeit ausgesetzt war, **dadurch gekennzeichnet, dass** die flüssigkeitsundurchlässige Folie (210) und die flüssigkeitsdurchlässige Folie (220) zusammen ein Etikett (200) zum Anbringen an der äußeren Oberfläche des Gehäuses (112) bilden, sodass die flüssigkeitsundurchlässige Folie (210) die Batterie vor Feuchtigkeit schützt, und dadurch, dass die flüssigkeitsundurchlässige Folie (210) eine innere Folie ist, die an das Gehäuse (112) gebunden ist, und die flüssigkeitsdurchlässige Folie (220) eine äußere Folie ist, die an die flüssigkeitsundurchlässige Folie (210) gebunden ist.

2. Sekundärbatterie nach Anspruch 1, wobei die äußere flüssigkeitsdurchlässige Folie (220) sich über den Indikator (300) erstreckt.

3. Sekundärbatterie nach Anspruch 2, wobei die äußere flüssigkeitsdurchlässige Folie (220) sich teilweise über den Indikator (300) erstreckt.

4. Sekundärbatterie nach Anspruch 3, wobei die äußere flüssigkeitsdurchlässige Folie (220) mindestens eine Öffnung (224) in einem Bereich des Indikators (300) aufweist.

5. Sekundärbatterie nach einem vorangehenden Anspruch, wobei der Indikator (300) eine einheitliche Schicht umfasst, die dazu ausgelegt ist, die visuelle Bestätigung bereitzustellen, wenn sie einer Flüssigkeit ausgesetzt ist.

6. Sekundärbatterie nach einem der Ansprüche 1 bis 4, wobei der Indikator (300) eine erste Schicht (320), die dazu ausgelegt ist, die visuelle Bestätigung bereitzustellen, wenn sie einer Flüssigkeit ausgesetzt ist, und eine Substratschicht (310), die die erste Schicht (320) an der inneren flüssigkeitsundurchlässigen Folie (210) befestigt, umfasst.

7. Sekundärbatterie nach Anspruch 6, wobei das Substrat (310) eine äußere, der inneren flüssigkeitsundurchlässigen Folie (210) abgewandte Oberfläche aufweist und die erste Schicht (320) auf einen zentralen Bereich der äußeren Oberfläche aufgebracht ist, sodass die Substratschicht (310) sich über die erste Schicht (320) hinaus um eine Peripherie der ersten Schicht (320) herum erstreckt.

8. Sekundärbatterie nach Anspruch 4, wobei die Öffnung (224) so bemessen ist, dass die äußere flüssigkeitsdurchlässige Folie (220) sich über einen Umfangsrand

9. Sekundärbatterie nach Anspruch 6 bis 7, wobei die Öffnung (224) so bemessen ist, dass die äußere flüssigkeitsdurchlässige Folie (220) sich über einen Umfangsrand der ersten Schicht (320) des Indikators (300) erstreckt.

10. Sekundärbatterie nach Anspruch 6 bis 7, wobei die Öffnung (224) so bemessen ist, dass die äußere flüssigkeitsdurchlässige Folie (220) sich über einen Umfangsrand der Substratschicht (310) des Indikators (300) erstreckt.

11. Sekundärbatterie nach einem der Ansprüche 3 bis 10, wobei die erste Schicht (320) dazu ausgelegt ist, ihre Gestalt, Form oder Farbe zu ändern, wenn sie einer Flüssigkeit ausgesetzt ist.

12. Sekundärbatterie nach einem vorangehenden Anspruch, wobei die äußere flüssigkeitsdurchlässige Folie (220) an den Indikator (300) gebunden ist, sodass die äußere flüssigkeitsdurchlässige Folie (220) nicht von dem Indikator (300) getrennt werden kann, ohne den Indikator (300) zu beschädigen, und dadurch eine visuelle Bestätigung darüber bereitzustellen, ob ein Versuch unternommen wurde, die äußere flüssigkeitsdurchlässige Folie (220) von der inneren flüssigkeitsundurchlässigen Folie (210) zu entfernen..

13. Sekundärbatterie nach Anspruch 12, wobei die innere flüssigkeitsundurchlässige Folie (210), die äußere flüssigkeitsdurchlässige Folie (220) und der Indikator (300) so aneinander gebunden sind, dass die Bindung zwischen der äußeren flüssigkeitsdurchlässigen Folie (220) und dem Indikator (300) stärker ist als die Bindung zwischen dem Indikator (300) und
der inneren flüssigkeitsundurchlässigen Folie (210), sodass der Indikator (300) sich mindestens teilweise von der inneren flüssigkeitsundurchlässigen Folie (220) abhebt und/oder Schaden nimmt, wenn ein Versuch unternommen wird, die äußere flüssigkeitsdurchlässige Folie (220) von der inneren flüssigkeitsundurchlässigen Folie (210) zu trennen.

## Revendications

1. Batterie secondaire comprenant un boîtier (112) pour recevoir un ensemble d'électrodes, une feuille imperméable aux liquides (210), une feuille perméable aux liquides (220) liée à la feuille imperméable aux liquides (210), et un indicateur (300) disposé entre ladite feuille perméable aux liquides (220) et la feuille imperméable aux liquides (210) de façon à délivrer une confirmation visuelle indicative du fait que la batterie a ou non été exposée à un liquide, **caractérisée en ce que** la feuille imperméable aux liquides (210) et la feuille perméable aux liquides (220) forment ensemble une étiquette (200) pour l'application sur la surface extérieure du boîtier (112), de telle sorte que la feuille imperméable aux liquides (210) protège la batterie de l'humidité, et **en ce que** la feuille imperméable aux liquides (210) est une feuille intérieure liée au boîtier (112) et **en ce que** la feuille perméable aux liquides (220) est une feuille extérieure liée à la feuille imperméable aux liquides (210).

2. Batterie secondaire selon la revendication 1, dans laquelle la feuille perméable aux liquides extérieure (220) s'étend sur l'indicateur (300).

3. Batterie secondaire selon la revendication 2, dans laquelle la feuille perméable aux liquides extérieure (220) s'étend partiellement sur l'indicateur (300).

4. Batterie secondaire selon la revendication 3, dans laquelle la feuille perméable aux liquides extérieure (220) comporte au moins une ouverture (224) dans une région de l'indicateur (300).

5. Batterie secondaire selon l'une quelconque des revendications précédentes, dans laquelle l'indicateur (300) comprend une couche unitaire configurée de façon à délivrer ladite confirmation visuelle lorsqu'elle est exposée à un liquide.

6. Batterie secondaire selon l'une quelconque des revendications 1 à 4, dans laquelle l'indicateur (300) comprend une première couche (320) configurée de façon à délivrer ladite confirmation visuelle lorsqu'elle est exposée à un liquide, et une couche de substrat (310) qui fixe la première couche (320) à la feuille imperméable aux liquides intérieure (210).

7. Batterie secondaire selon la revendication 6, dans laquelle le substrat (310) comporte une surface extérieure dirigée de façon à s'éloigner de la feuille imperméable aux liquides intérieure (210), et la première couche (320) est appliquée à une région centrale de ladite surface extérieure, de telle sorte que la couche de substrat (310) s'étende au-delà de la première couche (320) autour d'une périphérie de la première couche (320).

8. Batterie secondaire selon la revendication 4, dans laquelle l'ouverture (224) est dimensionnée de telle sorte que la feuille perméable aux liquides extérieure (220) s'étende sur un bord périphérique de l'indicateur (300) .

9. Batterie secondaire selon les revendications 6 à 7, dans laquelle l'ouverture (224) est dimensionnée de telle sorte que la feuille perméable aux liquides extérieure (220) s'étende sur un bord périphérique de la première couche (320) de l'indicateur (300).

10. Batterie secondaire selon les revendications 6 à 7, dans laquelle l'ouverture (224) est dimensionnée de telle sorte que la feuille perméable aux liquides extérieure (220) s'étende sur un bord périphérique de la couche de substrat (310) de l'indicateur (300).

11. Batterie secondaire selon l'une quelconque des revendications 3 à 10, dans laquelle la première couche (320) est configurée de façon à changer sa forme, sa conformation ou sa couleur lorsqu'elle est exposée à un liquide.

12. Batterie secondaire selon l'une quelconque des revendications précédentes, dans laquelle la feuille perméable aux liquides extérieure (220) est liée audit indicateur (300), de telle sorte que ladite feuille perméable aux liquides extérieure (220) ne puisse pas être séparée de l'indicateur (300) sans provoquer de dommages audit indicateur (300), de façon à délivrer ainsi une confirmation visuelle indicative du fait qu'il a été effectué ou non une tentative de retirer la feuille perméable aux liquides extérieure (220) de la feuille imperméable aux liquides intérieure (210).

13. Batterie secondaire selon la revendication 12, dans laquelle la feuille imperméable aux liquides intérieure (210), la feuille perméable aux liquides extérieure (220) et l'indicateur (300) sont liés de telle sorte que la liaison entre la feuille perméable aux liquides extérieure (220) et l'indicateur (300) soit plus forte que la liaison entre l'indicateur (300) et la feuille imperméable aux liquides intérieure (210), de telle sorte que l'indicateur (300) soit au moins partiellement soulevé de la feuille imperméable aux liquides intérieure (210), et/ou subisse une détérioration, lorsqu'il est effectué une tentative de séparer la feuille perméable aux liquides extérieure (220) de la feuille imperméable aux liquides intérieure (210).
